# EUROPEAN PATENT SPECIFICATION

(11) **EP 1 937 541 B1**
(45) Date of publication and mention of the grant of the patent: **02.06.2010**
(21) Application number: 05787267.3
(22) Date of filing: 29.09.2005
(51) Int. Cl.: B62K 15/00, B62K 5/04

(54) **SIZE-REDUCIBLE FOLDING TRICYCLE FOR CHILDREN**
KLAPP-DREIRAD FÜR KINDER MIT REDUZIERBARER GRÖSSE
TRICYCLE PLIANT POUR ENFANT DONT ON PEUT REDUIRE LA TAILLE

(43) Date of publication of application: 02.07.2008
(73) Proprietor: ARTSANA S.p.A., 22070 Grandate (Como) (IT)
(72) Inventor: CATELLI, Pietro, I-22100 Como (IT)
(74) Representative: Ripamonti, Enrico
(86) International application number: PCT/EP2005/010527
(87) International publication number: WO 2007/038951

(56) References cited:
- US-A- 4 457 529
- US-A- 4 852 898
- US-A- 5 697 464
- US-B1- 6 390 216

## Description

The present invention relates to a tricycle in accordance with the introduction to the main claim. A tricycle according to the preamble of the main claim is disclosed by US 4 852 898.

A tricycle is known to comprises a frame having a central part supporting at its front a head tube through which there rotatably passes a steering shaft connected to a front wheel and to a handlebar, said central part supporting a seat and being connected at its rear to side arms carrying rotatable wheels and projecting radially from said central part.

Tricycles are known in which a first end of said arms is hinged to said central part so that said arms can assume two working positions, in a first of which they project radially from said part and in a second of which they lie to the said thereof to reduce the tricycle dimensions. Such a tricycle is described for example in US4457529.

An object of the present invention as defined by independent claim 1 is to provide a tricycle of the stated type which is of very small dimensions when its side arms lie in their second working position.

Another object is to provide a tricycle of the stated type, the dimensions of which can also be reduced on only one of its sides.

A further object is to provide a tricycle of the stated type which is reliable in use and of which the dimensions can be easily reduced.

These and other objects which will be apparent to the expert of the art are attained by a tricycle in accordance with the accompanying claims.

The present invention will be more apparent from the accompanying drawing, which is provided by way of non-limiting example and in which:
Figure 1 is a perspective view of a tricycle of the invention in a first working position, seen from the rear;
Figure 2 is a view of the tricycle of Figure 1, seen from above;
Figure 3 is a view of the tricycle of Figure 1 in a different working position, seen from above;
Figure 4 is a front view of the tricycle of Figure 3;
Figure 5 is a view of the tricycle of Figure 1 in a further working position, seen from above;
Figure 6 is a side view of the tricycle of Figure 5;
Figure 7 is a front view of the tricycle of Figure 5;
Figure 8 is a side view of the tricycle of Figure 1, shown in a further working position;
Figure 9 is a front view of the tricycle of Figure 8;
Figure 10 is a view of the tricycle of Figure 8, seen from above;
Figure 11 is a perspective view of a part of the tricycle of Figure 8, seen from the rear;
Figure 12 is an exploded perspective view of the tricycle part of Figure 11, seen from the rear;
Figure 13 is a view of a detail of a variant of the invention seen from the rear, in an extended working position;
Figure 14 is a view similar to Figure 13, but with certain parts shown exploded;
Figure 15 is a view similar to Figure 13, but with the tricycle folded;
Figure 16 is a view similar to Figure 14, but showing the tricycle in its folded position.

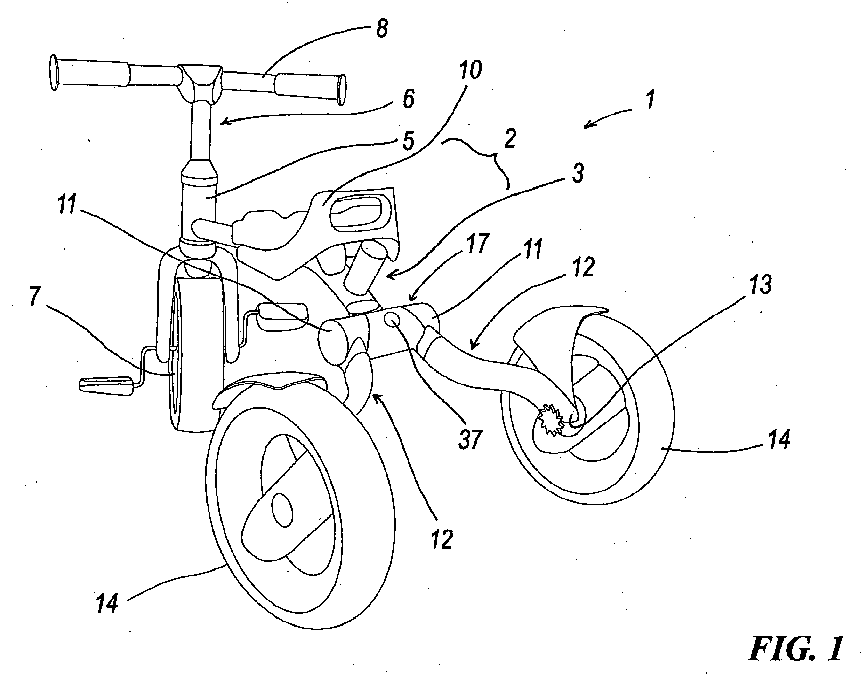

With reference to Figures 1-12, a tricycle of the invention is indicated overall by 1 and comprises a frame 2 having a central part 3 carrying at its front a head tube 5 through which a steering shaft 6 is rotatably inserted and connected lowerly (by means of a fork) to a wheel 7 (the tricycle front wheel) and upperly to a handlebar 8.

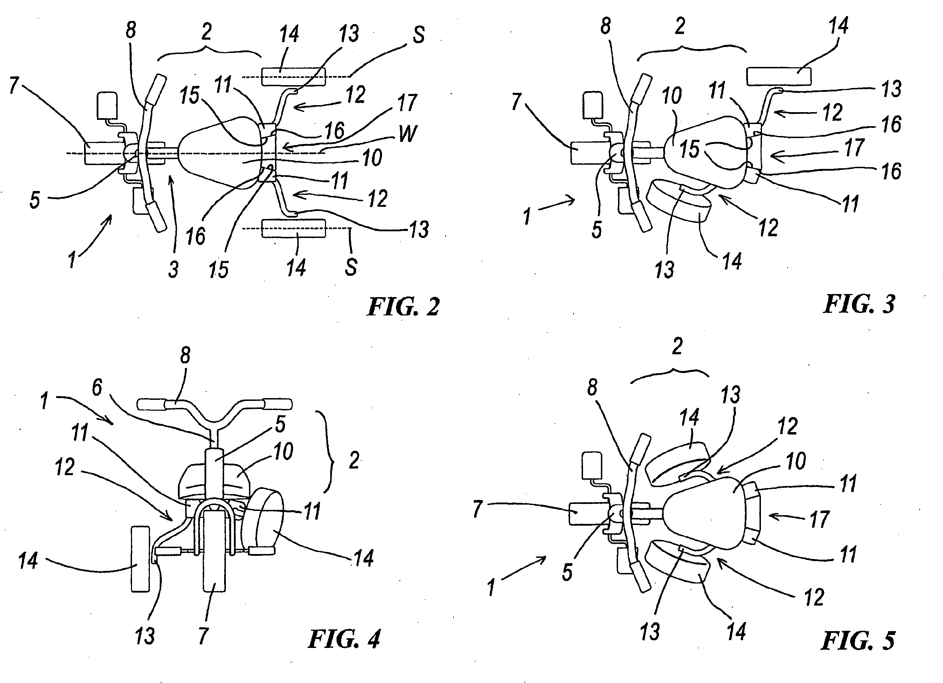

The central part 3 carries a seat 10 and is connected at its rear to first ends 11 of arms 12 which at their second end 13 carry a rotatable wheel 14. The first end 11 of each arm 12 is hinged to said central part 3 by a coupling formed by the cooperation between an end surface 15 and a corresponding free surface 16 of a connecting portion 17 of said central part 3, said connecting portion comprising a pin 20 about which the ends 11 of the arms 12 can rotate to enable these latter to assume at least one first working position (Figures 1 and 2) in which each arm 11 projects radially from the central part 3 of the frame 2 or at least one second working position (Figures 5-7) in which said arm lies along the side of said central part 3.

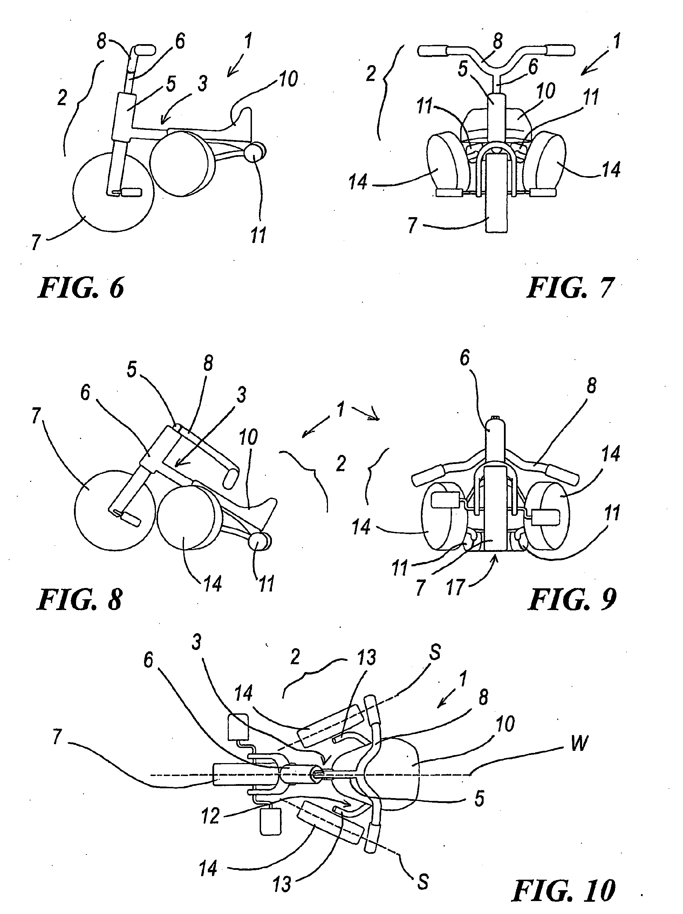

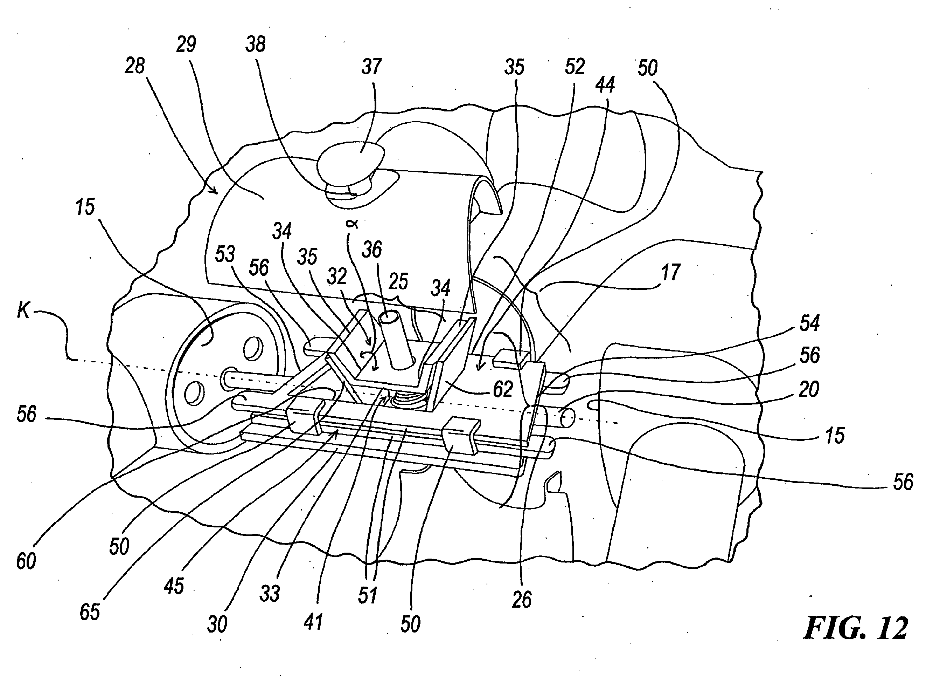

More specifically, the free surfaces 16 of the connecting portion 17 lie in planes inclined to a central plane (defined by the axis W of Figures 2 and 10) of the frame 2 of the tricycle 1 and converging to the front of said central part 3 of the tricycle. Likewise, the end surfaces 15 of said arms 12 are shaped to provide a form fit with the corresponding surfaces and consequently lie in a plane inclined to the longitudinal axis K of the respective first ends 11 (see Figure 12). By virtue of these shapes of the surfaces 15 and 16, when each arm 12 is brought into its second working position it lies such that the central plane S through the respective wheel 14 cuts the axis W of the frame 2 so that the planes S of the two wheels 14 (see Figures 2 and 10) converge towards the front of the tricycle. This allows a considerable reduction in the transverse dimensions of the tricycle when in its second working position (see Figure 5).

To enable each arm 11 to be moved independently of each other, the connecting portion 17 comprises release means 25 for said movement which are arranged to cooperate with corresponding counter-means 26 operationally cooperating with the first ends 11 of said arms 12.

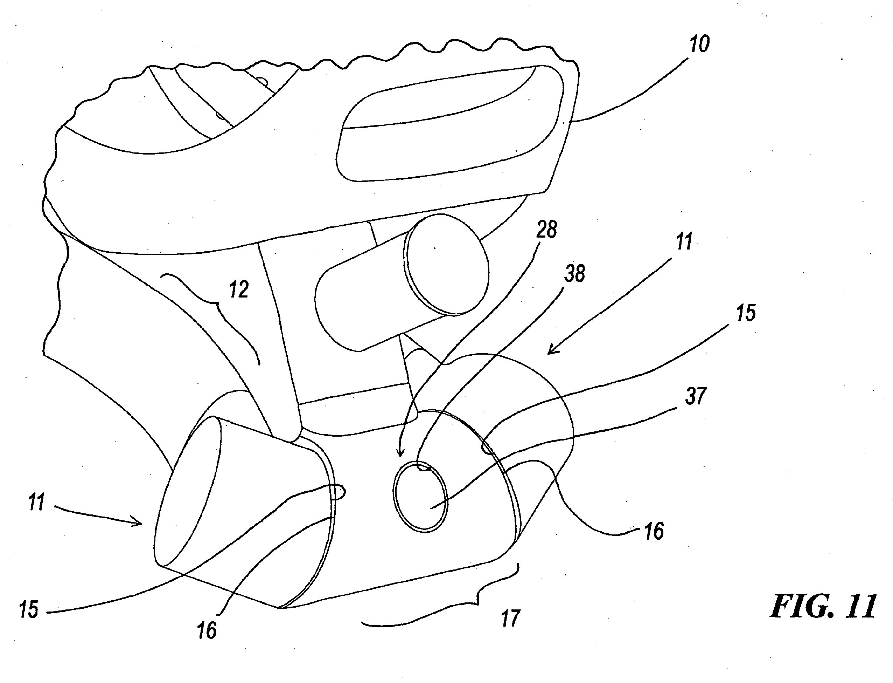

More specifically, in a first embodiment of the invention shown in particular in Figures 11 and 12, the portion 17 comprises a casing 28 defined by two parts 29 and 30 defining an inner comportment housing the means 25 and counter-means 26. The means 25 comprise a slide 32 having a flat part 33, from the opposing edges 34 of which there extend lugs 35 inclined to the part 33 by an obtuse angle α. A pin 36 projects upwards from the flat part 33 to cooperate with a pushbutton 37 disposed axially movable in a seat 38 in the part 29 of the casing 28 of the portion 17. Below said flat part 33 a compression spring 41 is present resting on the part 30 of said casing 28 and suitably fixed (in known manner and therefore not shown), at its opposite ends, to said parts 30 and 33. The counter-means 26 comprise superposed flat elements 44 and 45 guidedly slidable relative to each other on the part 30 of the casing 28 within guides defined by L-shaped brackets 50 rising from said part 30. Each flat element (of substantially rectangular shape) comprises opposing sides 51 and 52 cooperating with said brackets and other sides 53 and 54 perpendicular to the sides 51; the side 53 comprises projections 56 arranged to cooperate with seats 57 provided in the end surface 15 of the ends 11 of the adjacent arm 12. Each flat element 44 and 45 comprises an aperture 60, from one side 61 of which there rises a lug 62 inclined to the element 44 by an angle equal to the aforesaid angle α and consequently parallel to the adjacent lug 35 of the slide 32 against which the lug 35 rests.

From the element 45 there rises a lug 65 inclined to said lug and parallel to the adjacent lug 35 of the slide 32, against which it rests. The lugs 62 and 65 define a seat with movable walls for the slide 32, this seat tapering towards the part 30 of the casing 28. Consequently, by acting on the pushbutton 37 and pushing it towards the part 29 of the casing 28, the slide 32 moves towards said part 30 so that the lugs 35 of this latter cooperate with the lugs 62 and 65 of the flat elements 44 and 45. This cooperation results in mutual withdrawal of said lugs 62 and 65 (in a direction perpendicular to that of the movement of the slide 32) and hence in movement of the flat elements 44 and 45 relative to the part 30 of the casing 28. This movement results in the emergence of the projections 56 from the relative seats 57 and hence the ability to rotate the arms 12 about the pin 20, common to both the arms (or in two parts individually cooperating with these latter).

On releasing the pushbutton 37, the spring 41 withdraws it from the part 29 of the casing 28, while at the same time usual elastic elements (not shown) cooperating with the elements 44 and 45, and which oppose their aforesaid movement, bring these latter into their starting position in which their projections 56 again penetrate into the seats 57 (rotated through 180° compared with Figure 12) to lock the arms 12.

Alternatively, the slide 32 can be connected to the lugs 62 and 65 in known manner (for example by movable pins in inclined guides) such that the movement of the slide relative to the part 30 of the casing 28 results in a withdrawal movement of these lugs, but also to an approach of these latter. Finally, the steering shaft 5 can also be foldable so that the dimensions of the tricycle can be further reduced, as shown in Figures 8, 9, 10.

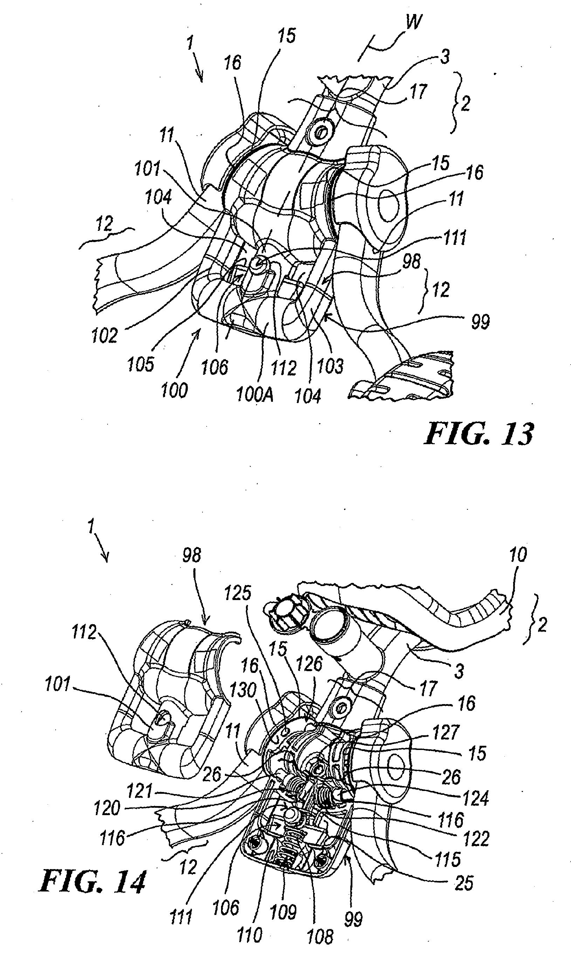

Figures 13-16, in which parts corresponding to those of the already described figures are indicated by the same reference numerals, show a variant of the aforesaid means 25 and 26. In the figures under examination, the connecting portion 17 presents a projecting part 100 (defined by a part 99 rigid with the part 3 and provided with a protection cover 98) presenting a central part 101 and two side portions 102, 103 defining through apertures 104, these portions being connected to one end 100A of the part 100.

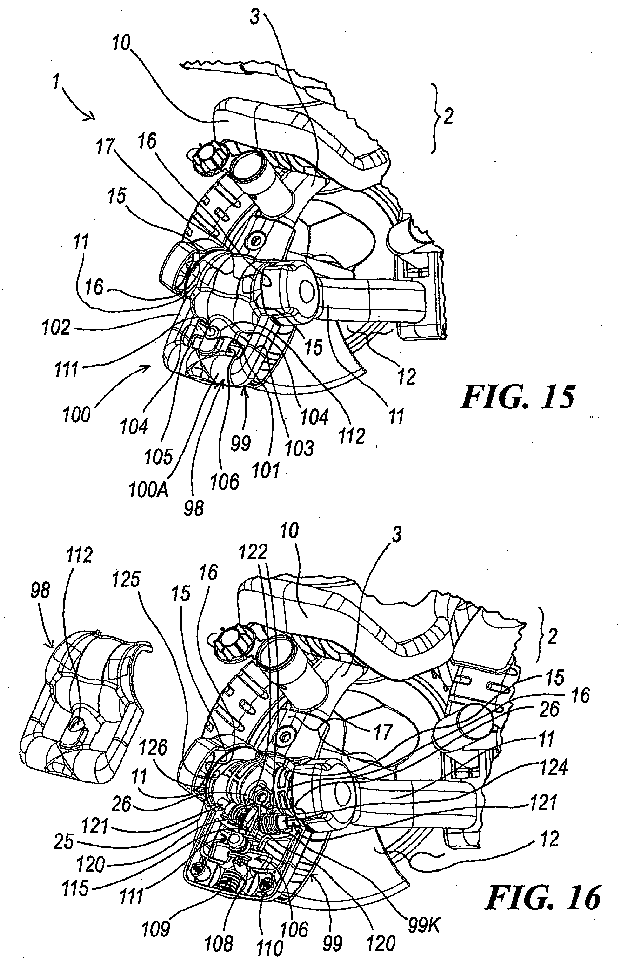

The apertures 104 accommodate one end 105 of a lever 106 movable relative to the part 100 and to its end 100A, it having a pin 108 internal to this latter and on which there is mounted one end of a spring 109 resting on a shoulder 110 within the part 100, and rigid with a pushbutton 111 movable, against the spring, relative to a hole 112 provided within the central part 101 of the part 100. On projecting from this hole (Figure 13), the pushbutton 111 prevents movement of the lever 106 relative to said end 100A, whereas if pressed into the hole 112 (Figure 15) it allows this movement against the spring 109.

The lever 106 is rigid with a rod 115 movable within the portion 101 of the part 100 and carrying at its free end opposing inclined lugs 116 converging towards the rod 115. On said lugs 116 (defining a wedge) there rest the flanged ends 120 of sleeves 124 rigid with pins 121 and slidable within the part 99. On each sleeve 124 there is mounted a spring 122 cooperating at its first end with the flange 120 of the sleeve 124, and with its other end thrusting against a wall 99K of the part 99.

Each pin 121 cooperates with a hole 125 provided in a disc 126, for example of metal, rigid with the end surface 15 of a corresponding arm 12 and substantially defining this surface. The arm 12 rotates about an axis as in the case of Figures 11 and 12, defined for example by a screw 127 which fixes the arm 12 to the connecting portion 17.

The aforedescribed cooperation between the pin 121 and the corresponding hole 125 takes place at least in the case in which the corresponding arm 12 is extended from the central part 3 (Figure 14). When the arm 12 is folded towards this latter, the pin 121 is able to rest on the flat surface 130 of the disc 126; alternatively and preferably, another hole 125 can be provided in said disc to receive the pin when the arm 12 is folded (as visible in Figure 14).

To pass from the projecting position in which at least one arm 12 projects form the part 3 (first working position) to that in which said arm is folded against the side of said part (second working position), the pushbutton 111 is pressed and the lever 106 moved towards the end 100A of the part 100. This movement displaces the lugs 116 from the flanged ends 120 of the pins 121 which, under the thrust action of the respective springs, approach each other by moving transversely towards the rod 115. This results in the emergence of each pin from the corresponding hole 125 and the ability to rotate the arms 12 relative to the portion 17 and to the part 3. After these have been displaced from the corresponding hole 125, the lever 106 can be released as the pins 121 rest on the surface 130 of the corresponding disc 126. The arms 12 can hence be folded towards the part 3. This movement stops when each pin 121 cooperates with the corresponding hole 125 provided in the disc 126 in a position such as to cooperate with the pin only when the arm 12 has been folded into its end position.

It should be noted that the part 100 of the portion 17 can be advantageously used as a handle for transporting the tricycle when folded.

Various preferred embodiments of the invention have been described. Others are however possible (for example relative to the means allowing the arms 12 to be moved and the positioning in the various working positions), these falling within the invention as described by the accompanying claims.

It should be noted that as the arms 12 are mutually independent, the tricycle can also be compacted on only one side, as shown in Figure 3, which can be advantageous for example for transporting the tricycle.

## Claims

1. A folding tricycle (1) for children, comprising a frame (2) having a central part (3) carrying at its front a head tube (5) through which there passes a steering shaft (6) connected to a front wheel (7) and to a handlebar (8), said central part (3) being connected at its rear to first ends (11) of rear arms (12) carrying a corresponding rotatable wheel (14) at their second end (13), the first end (11) of said arms (12) being hinged to said central part (3) such as to be able to assume at least two working positions, in a first position said arms (12) extending from said central part (3) and in a second position they lie along the side of said central part (3), the central part (3) of the frame (2) comprising a portion (17) connecting it to said first end (11) of said arms (12), said connecting portion (17) presenting free surfaces (16) lying in planes inclined to a central plane (W) of the frame (2) and converging to the front of said central part (3) of this latter, said first end of said arms (12) being shaped to provide a form fit with said free surfaces (16) and cooperating with these such that when in said second working position said arms (12) converge towards said central part (3), the ends (11) of the rear arms (12) being hinged to said connecting portion (17) about a hinge pin (20) rigid with said portion, **characterised in that** the connecting portion comprises a casing (28) with which means (25) and corresponding counter-means (26) are associated enabling each arm to move about the corresponding hinge pin (20).

2. A tricycle as claimed in claim 1, **characterised in that** the means (25) enabling said arms (12) to move are a member (32) slidable within the connecting portion (17) and cooperating with elements (44,45) movable in a direction perpendicular to that of the slidable member (32) in order to block the movement of the rear wheels (12) in any working position.

3. A tricycle as claimed in claim 2, **characterised in that** the slidable member (32) moves against a spring (41) and comprises, cooperating with the spring, a flat wall (33) from the sides of which there project inclined lugs (35), each of which cooperates with a corresponding inclined lug (62, 65) of each movable element (44, 45).

4. A tricycle as claimed in claim 1, **characterised in that** the slidable member (32) cooperates with a pushbutton (37) positioned on the casing 28) of the connecting portion (17).

5. A tricycle as claimed in claim 2, **characterised in that** the casing (28) of the connecting portion (17) comprises two superposed parts (29, 30) containing said means (25) and counter-means (26), a first part (29) lying above the second (30), on this latter there moving the movable elements (44, 45) guided by guide means (50) associated with said second part (30).

6. A tricycle as claimed in claim 5, **characterised in that** the guide means are L-shaped brackets associated with the second part (30) of the casing (28) of the connecting portion.

7. A tricycle as claimed in claim 1, **characterised in that** when the arms (12) are in their second working position, the central planes (S) through the rotatable wheels (14) associated therewith converge to the front of the tricycle central part (3).

8. A tricycle as claimed in claim 1, **characterised in that** the means (25) enabling the arms (12) to move are a member (106) which is movable within the connecting portion (17) and is rigid with wedge means (116) arranged to cooperate with elements (121) movable in directions transverse to that of said movable member (106), to block the movement of the rear arms (12) at least when in their first working position.

9. A tricycle as claimed in claim 8, **characterised in that** the movable member is a lever (106) movable within a projecting part (100) in the connecting portion, said lever (106) being associated with a pushbutton (111) movable within a seat (112) in said part (100) and arranged to enable or to block the movement of the lever depending on its position within said seat (112), the lever being subjected to the elastic action of a spring contained in said projecting part (100) and being connected to the wedge means (116) by a rod (115) slidably inserted into a portion of said projecting part (100).

10. A tricycle as claimed in claim 9, **characterised in that** the wedge means are positioned at the free end of the rod (115) connected to the lever (106).

11. A tricycle as claimed in claim 9, **characterised in that** the wedge means comprise two opposing lugs (116) which are inclined to the rod (115) supporting them and which converge towards this latter.

12. A tricycle as claimed in claim 8, **characterised in that** the movable elements are at least two pins (121), each arranged to cooperate with a corresponding rear arm (12) of the tricycle, each pin (121) being subjected to the elastic action of a spring (122) which maintains it pressing against a disc (126) rigid with the end (11) of the corresponding arm (12).

13. A tricycle as claimed in claim 12, **characterised in that** each pin (121) is arranged to cooperate with a seat (125) provided in the disc, at least when the rear arm (12) is in its first working position.

14. A tricycle as claimed in claim 13, **characterised in that** the pin (121) also cooperates with a seat provided in the disc (126), when the rear arm (12) is in its second working position.

15. A tricycle as claimed in claim 12, **characterised in that** each pin (121) moves within a corresponding sleeve (124) discoidal to the connecting portion (17) under the action of the wedge means (116) and against the action of the respective spring (122).

16. A tricycle as claimed in claim 12, **characterised in that** the spring (122) is positioned about the sheath (124) of each pin (121) and acts with one end against a flanged end (120) of the pin (121), the other end of the spring being rigid with the sheath (124).

17. A tricycle as claimed in claim 9, **characterised in that** the projecting part (100) of the connecting portion (17) presents at least one aperture (104) for the operation of the lever (106), said part (100) being grippable through this aperture to transport the tricycle, said part hence acting as the gripping element for such transport.

18. A tricycle as claimed in claim 9, **characterised in that** the projecting part (100) is defined by a first part (98) rigid with the connecting portion (17) and a second part (99) removably secured to the first part (98) and acting as the protection cover for this latter.

## Patentansprüche

1. Ein faltbares Dreirad (1) für Kinder, mit einem Rahmen (2), der ein Mittelteil (3) aufweist, das an seinem vorderen Ende ein Kopfrohr (5) trägt, durch das eine Lenksäule (6), läuft die mit einem Vorderrad (7) und mit einer Lenkstange (8) verbunden ist, wobei das genannte Mittelteil (3) an seinem Heck mit ersten Enden (11) von Hinterarmen (12) verbunden ist, die ein korrespondierendes drehbares Rad (14) an ihren zweiten Enden (13) tragen, wobei das erste Ende (11) der genannten Arme (12) schwenkbar befestigt an dem genannten Mittelteil (3) ist, so dass sie in der Lage sind, wenigstens zwei Arbeitsstellungen einzunehmen, wobei die genannten Arme (12) in einer ersten Stellung sich von dem genannten Mittelteil (3) weg erstrecken und sie in einer zweiten Stellung entlang der Seite des genannten Mittelteils (3) liegen, wobei das Mittelteil (3) des Rahmens (2) einen Abschnitt (17) aufweist, der es mit den genannten ersten Enden (11) der genannten Arme (12) verbindet, wobei der Verbindungsabschnitt (17) freie Flächen (16) vorweist, die in Ebenen liegen, die zu einer Mittelebene (W) des Rahmens (2) geneigt sind und zu dem vorderen Ende des genannten Mittelteils (3) zusammenlaufen, wobei das erste Ende der genannten Arme (12) geformt ist, um eine Form vorzusehen, die mit den genannten freien Flächen (16) zusammenpasst und mit diesen so kooperiert, dass, wenn die genannten Arme (12) in der genannten zweiten Arbeitsstellung sind, sie zu dem genannten Mittelteil (3) zusammenlaufen, wobei die Enden (11) der Hinterarme (12) über einen Scharnierstift (20) schwenkbar mit dem genannten Verbindungsabschnitt (17) verbunden sind, der fest an dem genannten Abschnitt ist,
**dadurch gekennzeichnet,**
**dass** der Verbindungsabschnitt ein Gehäuse (28) aufweist, dem Mittel (25) und korrespondierende Gegen-Mittel (26) zugeordnet sind, die jedem Arm ermöglichen, sich um den korrespondierenden Scharnierstift (20) zu bewegen.

2. Ein Dreirad gemäß Anspruch 1,
**dadurch gekennzeichnet,**
**dass** die Mittel (25), die den genannten Armen (12) ermöglichen, sich zu bewegen, ein Element (32) sind, das innerhalb des Verbindungsabschnitts (17) verschiebbar ist und mit Elementen (44, 45) zusammenwirkt, die in einer Richtung bewegbar sind, die normal ist zu der des verschiebbaren Eelementes (32), um die Bewegung der Hinderräder (12) in jeder Arbeitsstellung zu blockieren.

3. Ein Dreirad gemäß Anspruch 2,
**dadurch gekennzeichnet,**
**dass** das verschiebbare Element (32) sich gegen eine Feder (41) bewegt und eine flache Wand (33) enthält, die mit der Feder zusammenwirkt, wobei von den Seiten der Wand geneigte Laschen (35) vorspringen, von denen jede mit einer korrespondierenden geneigten Lasche (62, 65) von jeder der beweglichen Elemente (44, 45) zusammenwirkt.

4. Ein Dreirad gemäß Anspruch 1,
**dadurch gekennzeichnet,**
**dass** das Gleitelement (32) mit einem Druckknopf (37) zusammenwirkt, der am Gehäuse (28) des Verbindungselementes (17) angeordnet ist.

5. Ein Dreirad gemäß Anspruch 2,
**dadurch gekennzeichnet,**
**dass** das Gehäuse (28) des Verbindungsabschnitts (17) wenigstens zwei übereinander angeordnete Teile (29, 30) aufweist, die die genannten Mittel (25) und Gegen-Mittel (26) enthalten, wobei ein erstes Teil (29) über dem zweiten (30) liegt, wobei sich auf letzterem die beweglichen Elemente (44, 45) bewegen geführt durch Führungsmittel (50), die dem genannten zweiten Teil (30) zugeordnet sind.

6. Ein Dreirad gemäß Anspruch 5,
**dadurch gekennzeichnet,**
**dass** die Führungsmittel L-förmige Halter sind, die dem zweiten Teil (30) des Gehäuses (28) des Verbindungsabschnittes zugeordnet sind.

7. Ein Dreirad gemäß Anspruch 1,
**dadurch gekennzeichnet,**
**dass** wenn die Arme (12) in ihrer zweiten Arbeitsstellung sind, die Mittelebenen (S) durch die drehbaren Räder (14), die mit diesen verbunden sind, zu der Front des Dreirad-Mittelteils (3) konvergieren.

8. Ein Dreirad gemäß Anspruch 1,
**dadurch gekennzeichnet,**
**dass** die Mittel (25), die es den Armen (12) ermöglichen, sich zu bewegen, ein Element (106) sind, das innerhalb des Verbindungsabschnittes (17) beweglich ist und das steif ist bezüglich Keil-Mitteln (116), die angeordnet sind, um mit Elementen (121) zusammenzuwirken, die in Richtungen quer zu der der genannten beweglichen Elemente (106) beweglich sind, um die Bewegung der Hinterarme (12) zu blockieren, wenigstens wenn diese in ihrer ersten Arbeitsstellung sind.

9. Ein Dreirad gemäß Anspruch 8,
**dadurch gekennzeichnet,**
**dass** das bewegliche Element ein Schwenkarm (106) ist, der innerhalb eines vorstehenden Teils (100) im Verbindungsabschnitt beweglich ist, wobei der genannte Schwenkarm (106) mit einem Druckknopf (111) verbunden ist, der innerhalb eines Sitzes (112) in dem genannten Teil (100) beweglich ist und der angeordnet ist, um die Bewegung des Schwenkarms in Abhängigkeit von seiner Stellung innerhalb des genannten Sitzes (112) zu ermöglichen oder zu blockieren, wobei der Schwenkarm der elastischen Betätigung einer Feder unterliegt, die in dem genannten vorspringenden Teil (100) enthalten ist und mit den Keil-Mitteln (116) durch eine Stange (115) verbunden ist, die in einen Abschnitt des genannten vorspringenden Teils (100) verschiebbar eingeführt ist.

10. Ein Dreirad gemäß Anspruch 9,
**dadurch gekennzeichnet,**
**dass** die Keil-Mittel an dem freien Ende der Stange (115) angeordnet sind, die mit dem Schwenkarm (106) verbunden ist.

11. Ein Dreirad gemäß Anspruch 9,
**dadurch gekennzeichnet,**
**dass** die Keil-Mittel zwei gegenüberliegende Laschen (116) haben, die gegenüber der Stange (115), die sie trägt, geneigt sind und die in Richtung auf diese zusammenlaufen.

12. Ein Dreirad gemäß Anspruch 8,
**dadurch gekennzeichnet,**
**dass** die beweglichen Elemente wenigstens zwei Stifte (121) sind, von denen jeder angeordnet ist, um mit einem entsprechenden Hinterarm (12) des Dreirades zusammenzuwirken, wobei jeder Stift (121) der elastischen Betätigung durch eine Feder (122) unterliegt, die ihren Druck gegen eine Scheibe (126) aufrechterhält, die mit dem Ende (11) des entsprechendes Armes (12) fest verbunden ist.

13. Ein Dreirad gemäß Anspruch 12,
**dadurch gekennzeichnet,**
**dass** jeder Stift (121) angeordnet ist, um mit einem Sitz (125) zusammenzuwirken, der an der Scheibe vorgesehen ist, wenigstens wenn der Hinterarm (12) in seiner ersten Arbeitsstellung ist.

14. Ein Dreirad gemäß Anspruch 13,
**dadurch gekennzeichnet,**
**dass** der Stift (121) auch mit einem Sitz zusammenwirkt, der an der Scheibe (126) vorgesehen ist, wenn der Hinterarm (12) in seiner zweiten Arbeitsstellung ist.

15. Ein Dreirad gemäß Anspruch 12,
**dadurch gekennzeichnet,**
**dass** jeder Stift (121) sich innerhalb einer entsprechenden Buchse (124), die scheibenförmig ist bezüglich des Verbindungsabschnittes (17), unter der Wirkung des Keil-Mittels (116) und gegen die Wirkung der entsprechenden Feder (122) bewegt.

16. Ein Dreirad gemäß Anspruch 12,
**dadurch gekennzeichnet,**
**dass** die Feder (122) um die Hülle (124) von jedem Stift (121) angeordnet ist und mit einem Ende auf ein flanschartiges Ende (120) des Stiftes (121) wirkt, wobei das andere Ende der Feder fest ist mit der Hülle (124).

17. Ein Dreirad gemäß Anspruch 9,
**dadurch gekennzeichnet,**
**dass** das vorspringende Teil (100) des Verbindungselements (17) wenigstens eine Öffnung (104) für die Betätigung des Schwenkarms (106) aufweist, wobei das genannte Teil (100) durch diese Öffnung hindurch greifbar ist, um das Dreirad zu transportieren, wobei das genannte Teil demgemäß als ein Griffelement für einen solchen Transport wirkt.

18. Ein Dreirad gemäß Anspruch 9,
**dadurch gekennzeichnet,**
**dass** das vorspringende Teil (100) durch ein erstes Teil (98) definiert wird, das mit dem Verbindungsabschnitt (17) fest verbunden ist, und durch ein zweites Teil (99), das entfernbar an dem ersten Teil (98) befestigt ist und als eine Schutzhülle für letzteres wirkt.

## Revendications

1. Tricycle pliant (1) pour enfants, comprenant un châssis (2) ayant une partie centrale (3) supportant au niveau de sa partie avant, un tube de direction (5) à travers lequel on fait passer un arbre de direction (6) raccordé à une roue avant (7) et à un guidon (8), ladite partie centrale (3) étant raccordée au niveau de sa partie arrière, aux premières extrémités (11) des bras arrière (12) supportant une roue rotative (14) correspondante au niveau de leur seconde extrémité (13), la première extrémité (11) desdits bras (12) étant articulée par rapport à ladite partie centrale (3) afin de pouvoir prendre au moins deux positions de travail, dans une première position, lesdits bras (12) s'étendant à partir de ladite partie centrale (3) et dans une seconde position, se trouvant le long du côté de ladite partie centrale (3), la partie centrale (3) du châssis (2) comprenant une partie (17) la raccordant à ladite première extrémité (11) desdits bras (12), ladite partie de raccordement (17) présentant des surfaces libres (16) se trouvant dans des plans inclinés par rapport à un plan central (W) du châssis (2) et convergeant vers la partie avant de ladite partie centrale (3) de ce dernier, ladite première extrémité desdits bras (12) étant formée pour fournir un ajustement de forme avec lesdites surfaces libres (16) et coopérant avec celles-ci de sorte que lorsqu'ils sont dans ladite seconde position de travail, lesdits bras (12) convergent vers ladite partie centrale (3), les extrémités (11) des bras arrière (12) étant articulées à ladite partie de raccordement (17) autour d'une broche d'articulation (20) solidaire de ladite partie, **caractérisé en ce que** la partie de raccordement comprend un boîtier (28) avec lequel des moyens (25) et des contre-moyens (26) correspondants sont associés, permettant à chaque bras de se déplacer autour de la broche d'articulation (20) correspondante.

2. Tricycle selon la revendication 1, **caractérisé en ce que** les moyens (25) permettant auxdits bras (12) de se déplacer, sont un élément (32) pouvant coulisser à l'intérieur de la partie de raccordement (17) et coopérant avec des éléments (44, 45) mobiles dans une direction perpendiculaire à celle de l'élément coulissant (32) afin de bloquer le mouvement des roues arrière (12) dans l'une quelconque des positions de travail.

3. Tricycle selon la revendication 2, **caractérisé en ce que** l'élément coulissant (32) se déplace contre un ressort (41) et comprend, en coopération avec le ressort, une paroi plate (33) à partir des côtés de laquelle des pattes inclinées (35) font saillie, dont chacune coopère avec une patte inclinée (62, 65) correspondante de chaque élément mobile (44, 45).

4. Tricycle selon la revendication 1, **caractérisé en ce que** l'élément coulissant (32) coopère avec un bouton-poussoir (37) positionné sur le boîtier (28) de la partie de raccordement (17).

5. Tricycle selon la revendication 2, **caractérisé en ce que** le boîtier (28) de la partie de raccordement (17) comprend deux parties superposées (29, 30) contenant lesdits moyens (25) et lesdits contre-moyens (26), une première partie (29) se trouvant au-dessus de la seconde (30), sur cette dernière se déplaçant les éléments mobiles (44, 45) guidés par des moyens de guidage (50) associés à ladite seconde partie (30).

6. Tricycle selon la revendication 5, **caractérisé en ce que** les moyens de guidage sont des supports en forme de L associés à la seconde partie (30) du boîtier (28) de la partie de raccordement.

7. Tricycle selon la revendication 1, **caractérisé en ce que** lorsque les bras (12) sont dans leur seconde position de travail, les plans centraux (S) par le biais des roues rotatives (14) associées à ceux-ci, convergent vers la partie avant de la partie centrale (3) du tricycle.

8. Tricycle selon la revendication 1, **caractérisé en ce que** les moyens (25) permettant aux bras (12) de se déplacer, sont un élément (106) qui est mobile à l'intérieur de la partie de raccordement (17) et qui est solidaire des moyens de cale (116) agencés pour coopérer avec des éléments (121) mobiles dans des directions transversales à celle dudit élément mobile (106), afin de bloquer le mouvement des bras arrière (12) au moins lorsqu'ils sont dans leur première position de travail.

9. Tricycle selon la revendication 8, **caractérisé en ce que** l'élément mobile est un levier (106) mobile à l'intérieur d'une partie en saillie (100) dans la partie de raccordement, ledit levier (106) étant associé à un bouton poussoir (111) mobile à l'intérieur d'un siège (112) dans ladite partie (100) et agencé pour permettre ou pour bloquer le mouvement du levier en fonction de sa position à l'intérieur dudit siège (112), le levier étant soumis à l'action élastique d'un ressort contenu dans ladite partie en saillie (100) et étant raccordé aux moyens de cale (116) par une tige (115) insérée de manière coulissante dans une partie de ladite partie en saillie (100).

10. Tricycle selon la revendication 9, **caractérisé en ce que** les moyens de cale sont positionnés au niveau de l'extrémité libre de la tige (115) raccordée au levier (106).

11. Tricycle selon la revendication 9, **caractérisé en ce que** les moyens de cale comprennent deux pattes opposées (116) qui sont inclinées par rapport à la tige (115) les supportant et qui convergent vers cette dernière.

12. Tricycle selon la revendication 8, **caractérisé en ce que** les éléments mobiles sont au moins deux broches (121), chacune agencée pour coopérer avec un bras arrière (12) correspondant du tricycle, chaque broche (121) étant soumise à l'action élastique d'un ressort (122) qui la maintient appuyée contre un disque (126) solidaire de l'extrémité (11) du bras (12) correspondant.

13. Tricycle selon la revendication 12, **caractérisé en ce que** chaque broche (121) est agencée pour coopérer avec un siège (125) prévu dans le disque, au moins lorsque le bras arrière (12) est dans sa première position de travail.

14. Tricycle selon la revendication 13, **caractérisé en ce que** la broche (121) coopère également avec un siège prévu dans le disque (126), lorsque le bras arrière (12) est dans sa seconde position de travail.

15. Tricycle selon la revendication 12, **caractérisé en ce que** chaque broche (121) se déplace à l'intérieur d'un manchon (124) correspondant discoïdal par rapport à la partie de raccordement (17) sous l'action des moyens de cale (116) et contre l'action du ressort (122) respectif.

16. Tricycle selon la revendication 12, **caractérisé en ce que** le ressort (122) est positionné autour de la gaine (124) de chaque broche (121) et agit avec une extrémité contre une extrémité à rebord (120) de la broche (121), l'autre extrémité du ressort étant solidaire de la gaine (124).

17. Tricycle selon la revendication 9, **caractérisé en ce que** la partie en saillie (100) de la partie de raccordement (17) présente au moins une ouverture (104) pour le fonctionnement du levier (106), ladite partie (100) pouvant être saisie par cette ouverture pour transporter le tricycle, ladite partie agissant ainsi en tant qu'élément de préhension pour un tel transport.

18. Tricycle selon la revendication 9, **caractérisé en ce que** la partie en saillie (100) est définie par une première partie (98) solidaire de la partie de raccordement (17) et une seconde partie (99) fixée de manière amovible à la première partie (98) et agissant en tant que couvercle de protection pour cette dernière.
